# EUROPEAN PATENT SPECIFICATION

(11) **EP 4 391 180 B1**
(45) Date of publication and mention of the grant of the patent: **05.08.2026**
(21) Application number: 22894242.1
(22) Date of filing: 20.06.2022
(51) Int. Cl.: H01M 50/264, H01M 10/04, H01M 50/204, H01M 50/209, H01M 50/242, H01M 50/244, H01M 50/251, H01M 50/262

(54) **CABINET BODY OF ENERGY STORAGE APPARATUS, AND ENERGY STORAGE APPARATUS AND MANUFACTURING METHOD AND MANUFACTURING DEVICE THEREFOR**
SCHRANKKÖRPER EINER ENERGIESPEICHERVORRICHTUNG SOWIE ENERGIESPEICHERVORRICHTUNG UND HERSTELLUNGSVERFAHREN UND HERSTELLUNGSVORRICHTUNG DAFÜR
CORPS D'ARMOIRE D'APPAREIL DE STOCKAGE D'ÉNERGIE, ET APPAREIL DE STOCKAGE D'ÉNERGIE ET SON PROCÉDÉ DE FABRICATION, ET SON DISPOSITIF DE FABRICATION

(30) Priority: 17.11.2021 CN 202111362676
(43) Date of publication of application: 26.06.2024
(73) Proprietor: Contemporary Amperex Technology (Hong Kong) Limited, Central, Central And Western District (HK)
(72) Inventor: LUO, Hao, Ningde, Fujian 352100 (CN); SU, Haibin, Ningde, Fujian 352100 (CN); PENG, Haoran, Ningde, Fujian 352100 (CN); WANG, Zengzhong, Ningde, Fujian 352100 (CN)
(74) Representative: Gong, Jinping
(86) International application number: PCT/CN2022/099783
(87) International publication number: WO 2023/087699

(56) References cited:
- CN-A- 1 256 012
- CN-A- 109 478 699
- CN-U- 210 182 447
- CN-U- 210 182 881
- CN-U- 210 182 881
- JP-A- 2002 222 641
- US-B1- 6 257 427

## Description

### CROSS-REFERENCE TO RELATED APPLICATIONS

This application claims priority to Chinese patent application No. 202111362676.1, filed on November 17, 2021 and entitled "CABINET OF ENERGY STORAGE APPARATUS, ENERGY STORAGE APPARATUS, AND MANUFACTURING METHOD AND DEVICE THEREOF".

### TECHNICAL FIELD

Embodiments of this application relate to the field of energy storage technologies, and specifically to a cabinet of an energy storage apparatus, an energy storage apparatus, and a manufacturing method and device of energy storage apparatus.

### BACKGROUND

Due to the widespread demand for clean energy in the market, energy storage apparatuses have been widely used. The market requires energy storage apparatuses to have high capacity to meet sufficient energy storage needs. Therefore, how the energy density of the energy storage apparatus is increased has become an urgent problem to be addressed.
US6257427B1 describes a modular assembly-type stand with earthquake-proof retention means, particularly for storage batteries and the like, comprising a supporting framework.

### SUMMARY

In view of the foregoing problem, embodiments of this application provide a cabinet of an energy storage apparatus, an energy storage apparatus, and a manufacturing method as defined in the claims, so as to increase the energy density of the energy storage apparatus.

A first aspect of this application provides a cabinet of an energy storage apparatus. The cabinet includes a bracket, and the bracket includes a first rack and a second rack. The first rack is configured to hold a first battery. The second rack is configured to hold a second battery. The first battery includes a first flange extending towards the second battery, and the second battery includes a second flange extending towards the first battery. In a height direction of the cabinet, the first rack and the second rack are located on different height planes, such that the first flange and the second flange are offset in the height direction.

The bracket provided in this embodiment allows the two batteries carried by the bracket to be positioned on different height planes, enabling the flanges of the two batteries placed back to back to be offset from each other, thus reducing a spatial waste caused by the flanges of the batteries and increasing the energy density of the energy storage apparatus.

Optionally, the bracket further includes a connecting portion, and the connecting portion is configured to connect the first rack and the second rack.

Optionally, the bracket further includes a first stop block and a second stop block. The first stop block is connected to an end of the first rack close to the second rack, and the first stop block is configured to limit movement of the first battery towards the second rack. The second stop block is connected to an end of the second rack close to the first rack, and the second stop block is configured to limit movement of the second battery towards the first rack. The arrangement of the stop blocks can limit movement of the first battery and the second battery, preventing collision between batteries.

The first rack includes a first holding portion and a first limiting portion connected to each other. The first holding portion is configured to hold the first battery and the first limiting portion is configured to limit movement of the first battery along a length direction of the cabinet, the length direction of the cabinet being perpendicular to the height direction of the cabinet. The second rack includes a second holding portion and a second limiting portion connected to each other. The second holding portion is configured to hold the second battery, and the second limiting portion is configured to limit movement of the second battery along the length direction of the cabinet. The bracket provided in this embodiment can limit the movement of the battery along the length direction of the cabinet, thereby preventing the first battery and the second battery from shaking within the cabinet.

The bracket further includes a retaining bar. The retaining bar is connected to an end of the first limiting portion away from the first holding portion, and the retaining bar is configured to press against the first battery so as to limit movement of the first battery along the height direction of the cabinet. Optionally, the retaining bar is connected to an end of the second limiting portion away from the second holding portion, and the retaining bar is configured to press against the second battery so as to limit movement of the second battery along the height direction of the cabinet. The bracket being provided with the retaining bar can limit movement of a box along the height direction of the energy storage apparatus, thereby preventing the first battery and the second battery from shaking within the cabinet.

The retaining bar is provided in a quantity of at least two. A distance between the retaining bar located at an end of the first limiting portion away from the second battery and the first holding portion is L1, and a distance between the retaining bar located at an end of the first limiting portion close to the second battery and the first holding portion is L2, where L1 > L2. Optionally, a distance between the retaining bar located at an end of the second limiting portion away from the first battery and the second holding portion is L3, and a distance between the retaining bar located at an end of the second limiting portion close to the first battery and the second holding portion is L4, where L3 > L4. As the retaining bars get closer to the connecting portion, distances between each retaining bar and the first holding portion, as well as the second holding portion, become smaller, which is conducive for the retaining bar to perform guiding and pressing functions when the battery is pushed into the bracket.

Optionally, the bracket further includes a buffer pad. The buffer pad is disposed on a surface of the retaining bar close to the first holding portion and/or the second holding portion, and the buffer pad is configured to abut against the first battery and/or the second battery. The buffer pad adhered to the lower surface of the retaining bar can prevent the battery from getting bumped during mounting and transportation, thus protecting the battery.

Optionally, the bracket further includes a fixing assembly. The fixing assembly is configured to fixedly connect the cabinet to the first battery, and fixedly connect the cabinet to the second battery.

Optionally, the fixing assembly includes a first liner plate, a second liner plate, a first adapter sheet, and a second adapter sheet. The first liner plate is fixedly connected to an end of the first holding portion away from the connecting portion. The second liner plate is fixedly connected to an end of the second holding portion away from the connecting portion. The first adapter sheet is configured to fixedly connect the first liner plate to the first battery. The second adapter sheet is configured to fixedly connect the second liner plate to the second battery. The bracket provided in this embodiment can be fixedly connected to the battery, thus fixing the battery to the cabinet and preventing the battery from sliding out of the cabinet.

A second aspect of this application provides an energy storage apparatus, including a first battery, a second battery, and the cabinet according to any one of the foregoing embodiments. The first battery includes a first flange extending towards the second battery, and the second battery includes a second flange extending towards the first battery. The cabinet is configured to accommodate the first batteries and the second batteries.

A third aspect of this application provides a manufacturing method of energy storage apparatus, including providing a first battery and a second battery, and providing a cabinet. Providing a first battery and a second battery, where the first battery includes a first flange extending towards the second battery, and the second battery includes a second flange extending towards the first battery. Providing a cabinet, where the cabinet includes a bracket, and the bracket includes a first rack and a second rack, the first rack being configured to hold the first battery and the second rack being configured to hold the second battery. In a height direction of the cabinet, the first rack and the second rack are located on different height planes, such that the first flange and the second flange are offset in the height direction.

It is disclosed a manufacturing device of energy storage apparatus, including a providing module and an assembly module. The providing module is configured to provide a first battery, a second battery, and a cabinet. The first battery includes a first flange extending towards the second battery, and the second battery includes a second flange extending towards the first battery. The cabinet includes a bracket, and the bracket includes a first rack and a second rack, the first rack being configured to hold the first battery and the second rack being configured to hold the second battery. In a height direction of the cabinet, the first rack and the second rack are located on different height planes, such that the first flange and the second flange are offset in the height direction. The assembly module is configured to accommodate the first batteries and the second batteries in the cabinet.

The foregoing description is merely an overview of the technical solution of this application. For a better understanding of the technical means in this application such that they can be implemented according to the content of the specification, and to make the above and other objectives, features, and advantages of this application more obvious and easier to understand, the following describes specific embodiments of this application.

### BRIEF DESCRIPTION OF DRAWINGS

Persons of ordinary skill in the art can clearly understand various other advantages and benefits by reading the detailed description of the preferred embodiments below. The accompanying drawings are merely intended to illustrate the preferred embodiments and are not intended to limit this application. In addition, in all the accompanying drawings, same parts are denoted by same reference signs. In the accompanying drawings:
FIG. 1 is a schematic structural diagram of an energy storage apparatus according to some embodiments of this application;
FIG. 2 is a schematic structural exploded view of a battery according to some embodiments of this application;
FIG. 3 is a schematic structural diagram of a battery module according to some embodiments of this application;
FIG. 4 is a schematic structural exploded view of a battery cell according to some embodiments of this application;
FIG. 5 is a partially schematic structural diagram of a cabinet according to some embodiments of this application;
FIG. 6 is a partially schematic structural diagram of an energy storage apparatus according to some embodiments of this application;
FIG. 7 is an enlarged view of region A in FIG. 6;
FIG. 8 is a schematic structural diagram of a bracket according to some embodiments of this application;
FIG. 9 is an enlarged view of region B in FIG. 8;
FIG. 10 is a front view of a partial structure of another energy storage apparatus according to some embodiments of this application;
FIG. 11 is a schematic flowchart of a manufacturing method of energy storage apparatus according to some embodiments of this application; and
FIG. 12 is a schematic structural diagram of a manufacturing device of energy storage apparatus according to some embodiments of this application.

Reference signs in specific embodiments are as follows:
1000. energy storage apparatus;
100. battery, 200. cabinet;
10. box, 11. first portion, 12. second portion. 13. flange;
20. battery module, 21. battery cell, 211. end cover, 211a. electrode terminal, 212. housing, 213. electrode assembly;
110. first battery, 111. first flange, 120. second battery, 121. second flange;
30. bracket; 31. first rack, 31a. first holding portion, 31b. first limiting portion, 32. second rack, 32a. second holding portion, 32b. second limiting portion, 33. connecting portion, 341. first stop block, 342. second stop block, 35. retaining bar, 36. buffer pad, 37. fixing assembly, 371. first liner plate, 372. second liner plate, 373. first adapter sheet, and 374. second adapter sheet.

### DETAILED DESCRIPTION OF EMBODIMENTS

The following describes in detail the embodiments of technical solutions of this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by those skilled in the art to which this application relates. The terms used herein are intended to merely describe the specific embodiments rather than to limit this application. The terms "include", "have", and any other variations thereof in the specification, claims and brief description of drawings of this application are intended to cover non-exclusive inclusions.

In the description of the embodiments of this application, the terms "first", "second", and the like are merely intended to distinguish between different objects, and shall not be understood as any indication or implication of relative importance or any implicit indication of the number, sequence or primary-secondary relationship of the technical features indicated. In the description of this application, "a plurality of" means at least two unless otherwise specifically stated.

In this specification, reference to "embodiment" means that specific features, structures or characteristics described with reference to the embodiment may be incorporated in at least one embodiment of this application. The word "embodiment" appearing in various positions in the specification does not necessarily refer to the same embodiment or an independent or alternative embodiment that is exclusive of other embodiments. It is explicitly or implicitly understood by persons skilled in the art that the embodiments described herein may be combined with other embodiments.

In the description of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between contextually associated objects.

In the description of the embodiments of this application, the term "a plurality of" means more than two (inclusive). Similarly, "a plurality of groups" means more than two (inclusive) groups, and "a plurality of pieces" means more than two (inclusive) pieces.

In the description of the embodiments of this application, the orientations or positional relationships indicated by the technical terms "center", "longitudinal", "transverse", "length", "width", "thickness", "upper", "lower", "front", "rear", "left", "right", "vertical", "horizontal", "perpendicular", "parallel", "top", "bottom", "inside", "outside", "clockwise", "counterclockwise", "axial", "radial", "circumferential", and the like are based on the orientations or positional relationships as shown in the accompanying drawings. These terms are merely for ease and brevity of description of the embodiments of this application rather than indicating or implying that the means or components mentioned must have specific orientations or must be constructed or manipulated according to specific orientations, and therefore shall not be construed as any limitations on embodiments of this application.

In the description of the embodiments of this application, unless otherwise specified and defined explicitly, the terms "mount", "connect", "join", and "fix" should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements. Persons of ordinary skill in the art can understand specific meanings of these terms in this application as appropriate to specific situations.

In the existing energy storage apparatus, to avoid interference between flanges of two batteries back to back, a large space needs to be reserved on the bracket, causing a spatial waste of the energy storage apparatus, thus decreasing the energy density of the energy storage apparatus. For this, this application provides an offset design for the bracket of the cabinet in the energy storage apparatus, enabling two batteries on the same bracket to be on different height planes. This offset design allows for a height difference, between the two batteries back to back, by which the flanges of the two batteries are offset from each other, reducing a spatial waste caused by the flanges of the battery and increasing the space utilization of the energy storage apparatus, thus increasing the energy density of the energy storage apparatus.

The cabinet of the energy storage apparatus disclosed in this embodiment of this application can be used in the energy storage apparatus. The energy storage apparatus is used to store energy. For example, when a device using electric energy is required, an apparatus storing electric energy is also required. The energy storage apparatus includes a cabinet and a battery.

For ease of description, an energy storage apparatus 1000 of an embodiment of this application is used as an example in the following embodiments.

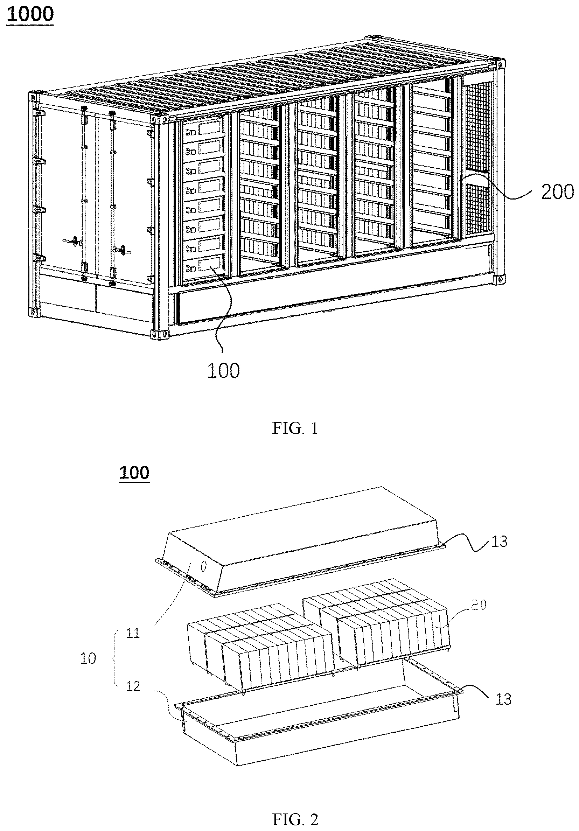

Referring to FIG. 1, FIG. 1 is a schematic structural diagram of an energy storage apparatus 1000 according to some embodiments of this application. Batteries 100 and a cabinet 200 are disposed in the energy storage apparatus 1000, and the battery 100 may be disposed on the cabinet 200. The plurality of batteries 100 may be stacked top-down in the cabinet 200.

Referring to FIG. 2, FIG. 2 is an exploded view of a battery 100 according to some embodiments of this application. The battery 100 includes a box 10 and battery cells 21, where the battery cells 21 are accommodated in the box 10. The box 10 is configured to provide an accommodating space for the battery cells 21. The box 10 may be a variety of structures. In some embodiments, the box 10 may include a first portion 11 and a second portion 12. The first portion 11 and the second portion 12 fit together so that the first portion 11 and the second portion 12 jointly define an accommodating space for accommodating the battery cells 21. Optionally, to ensure the sealing effect, the first portion 11 and the second portion 12 are each provided with a flange 13 for fitting at an edge position. The second portion 12 may be of a hollow structure with one end open, and the first portion 11 may be of a plate structure, where the first portion 11 covers the open side of the second portion 12 for the first portion 11 and the second portion 12 to jointly define an accommodating space; or alternatively, the first portion 11 and the second portion 12 may both be of hollow structures with one side open, where the open side of the first portion 11 is engaged with the open side of the second portion 12. Certainly, the box 10 formed by the first portion 11 and the second portion 12 may have a variety of shapes, for example, cylinder or cuboid.

In the battery 100, the battery cell 21 may be present in plurality, and the plurality of battery cells 21 may be connected in series, parallel, or series-parallel, where being connected in series-parallel means a combination of series and parallel connections of the plurality of battery cells 21. The plurality of battery cells 21 may be directly connected in series, parallel or series-parallel, and then an entirety of the plurality of battery cells 21 is accommodated in the box 10; or certainly, the battery 100 may be formed by a plurality of battery cells 21 being connected in series, parallel or series-parallel first to form a battery module 20 and then a plurality of battery modules 20 being connected in series, parallel or series-parallel to form an entirety which is accommodated in the box 10. The battery 100 may further include other structures. For example, the battery 100 may further include a busbar configured to implement electrical connection between the plurality of battery cells 21.

Each battery cell 21 may be a secondary battery or a primary battery; or may be a lithium-sulfur battery, a sodium-ion battery, or a magnesium-ion battery, without being limited thereto. The battery cell 21 may be cylindrical, straight, cuboid, or of other shapes.

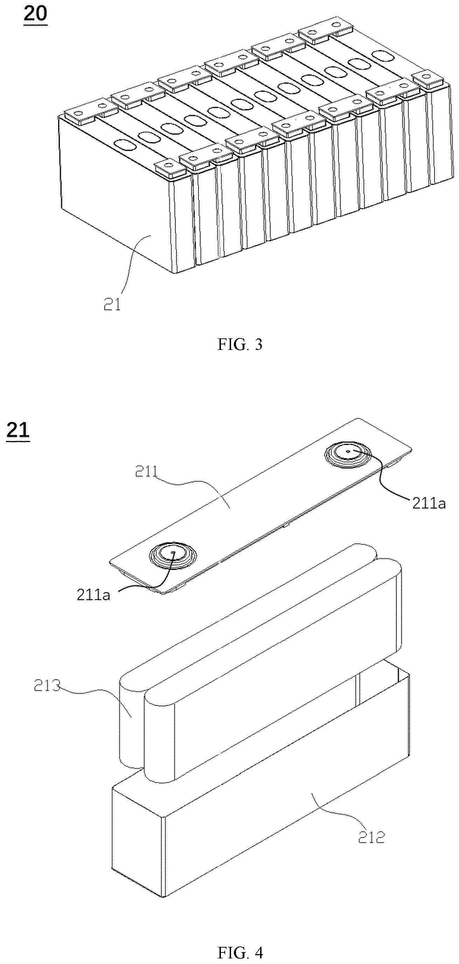

Referring to FIG. 3, FIG. 3 is a schematic structural diagram of a battery module 20 according to some embodiments of this application. In FIG. 3, the battery module 20 may include a plurality of battery cells 21. The plurality of battery cells 21 may first be connected in series, parallel, or series-parallel to constitute battery modules 20, and then a plurality of battery modules 20 may be connected in series, parallel, or series-parallel to constitute a battery 10. The battery cells 21 are typically categorized into three types depending on their packaging: cylinder battery cell, prismatic battery cell, and pouch battery cell, and this is also not limited in the embodiments of this application. However, for brevity of description, the following embodiments are all described by taking a prismatic battery cell as an example.

FIG. 4 is a schematic structural exploded view of a battery cell 21 according to some embodiments of this application. The battery cell 21 refers to a smallest element constituting the battery 100. As shown in FIG. 4, the battery cell 21 includes an end cover 211, a housing 212, and an electrode assembly 213.

The end cover 211 refers to a component that covers an opening of the housing 212 to isolate an internal environment of the battery cell 21 from an external environment. A shape of the end cover 211 may be adapted to a shape of the housing 212 to fit the housing 212. Optionally, the end cover 211 may be made of a material with specified hardness and strength (for example, aluminum alloy), so that the end cover 211 is less likely to deform when subjected to extrusion and collision, allowing the battery cell 21 to have higher structural strength and enhanced safety performance. The end cover 211 may be provided with functional components such as an electrode terminal 211a. The electrode terminal 211a may be configured to be electrically connected to the electrode assembly 213 for outputting or inputting electric energy of the battery cell 21. In some embodiments, the end cover 211 may further be provided with a pressure relief mechanism for releasing internal pressure when the internal pressure or a temperature of the battery cell 21 reaches a threshold. In some embodiments, an insulator may also be provided at an inner side of the end cover 211. The insulator may be configured to isolate an electrically connected component in the housing 212 from the end cover 211 to reduce a risk of short circuit. For example, the insulator may be made of plastic, rubber, or the like.

The housing 212 is an assembly configured to cooperate with the end cover 211 to form an internal environment of the battery cell 21, where the formed internal environment can be configured to accommodate the electrode assembly 213, an electrolyte (not shown in the figure), and other components. The housing 212 and the end cover 211 may be separate components, an opening may be provided on the housing 212, and the end cover 211 covers the opening to form the internal environment of the battery cell 21. Optionally, the end cover 211 and the housing 212 may be alternatively integrated. Specifically, the end cover 211 and the housing 212 may form a shared connection surface before other components are disposed inside the housing, and then the housing 212 is covered with the end cover 211 when inside of the housing 212 needs to be enclosed. The housing 212 may be of various shapes and sizes, such as a cuboid shape, a cylindrical shape, and a hexagonal prism shape. Specifically, a shape of the housing 212 may be determined according to a specific shape and size of the electrode assembly 213. The housing 212 may be made of various materials, such as copper, iron, aluminum, stainless steel, aluminum alloy, and plastic, which are not particularly limited in the embodiments of this application.

The electrode assembly 213 is a component in which electrochemical reactions occur in the battery cell 21. The housing 212 may include one or more electrode assemblies 213. The electrode assembly 213 is mainly formed by winding or stacking a positive electrode plate and a negative electrode plate, and a separator is generally disposed between the positive electrode plate and the negative electrode plate. The parts with an active substance on the positive electrode plate and the negative electrode plate constitute a body portion of the electrode assembly 213, and the parts without the active substance on the positive electrode plate and the negative electrode plate respectively constitute tabs (not shown in the figure). A positive tab and a negative tab may both be located at one end of the body portion or be located at two ends of the body portion respectively. During charge and discharge of the battery 100, a positive electrode active substance and a negative electrode active substance react with an electrolyte, and the tabs are connected to the electrode terminals 211a to form a current loop.

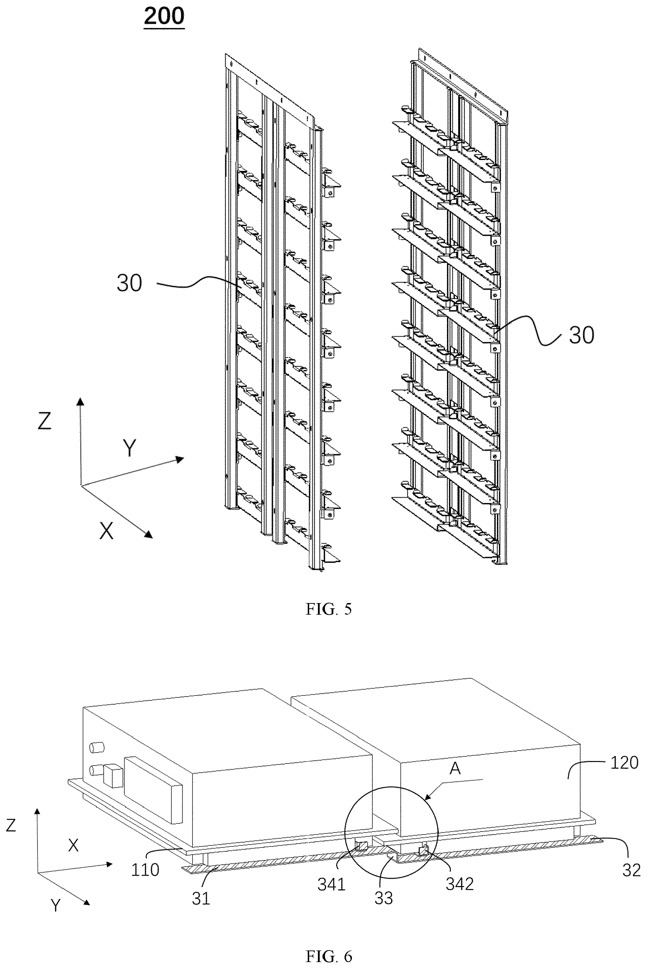

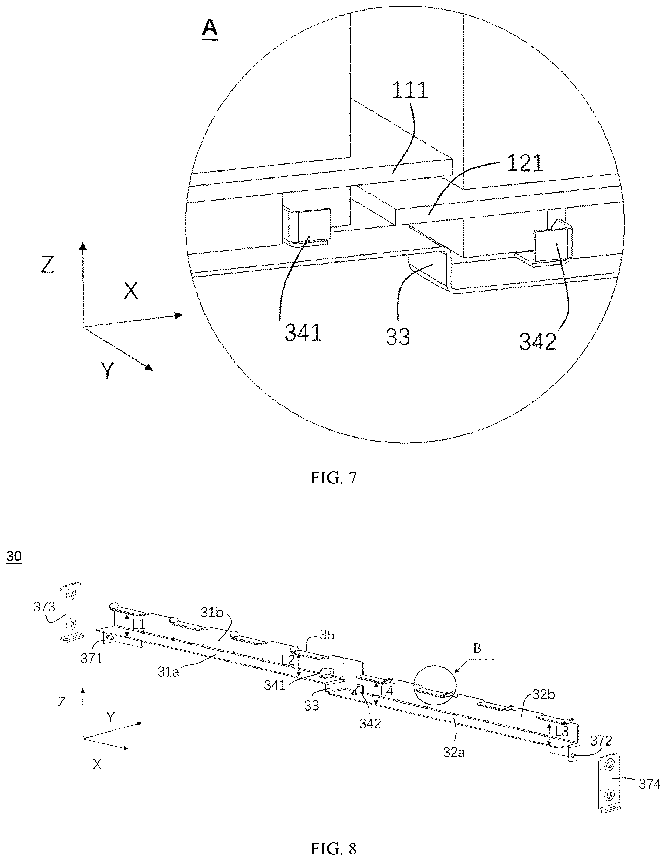

Referring to FIGs. 5 to 7, FIG. 5 is a partially schematic structural diagram of a cabinet 200 of an energy storage apparatus 1000 according to some embodiments of this application, FIG. 6 is a partially schematic structural diagram of an energy storage apparatus 1000 according to some embodiments of this application, and FIG. 7 is an enlarged view of region A in FIG. 6.

A first aspect of this application provides a cabinet 200 of an energy storage apparatus 1000, including a bracket 30 configured to hold the batteries 100. The bracket 30 includes a first rack 31 and a second rack 32. The first rack 31 is configured to hold a first battery 110. The second rack 32 is configured to hold a second battery 120. The first battery 110 includes a first flange 111 extending towards the second battery 120, and the second battery 120 includes a second flange 121 extending towards the first battery 110. In a height direction Z of the cabinet 200, the first rack 31 and the second rack 32 are located on different height planes, such that the first flange 111 and the second flange 121 are offset in the height direction Z.

Optionally, the bracket 30 further includes a connecting portion 33, the connecting portion 33 being configured to connect the first rack 31 and the second rack 32.

The bracket 30 may be made of a metal material such as steel or aluminum alloy, or a composite material. The bracket 30 may be integrally molded, or formed by welding the first rack 31, the second rack 32, and the connecting portion 33. The bracket 30 may be of a Z-shaped structure, enabling the first battery 110 and the second battery 120 respectively carried by the first rack 31 and the second rack 32 to be on different height planes.

The first rack 31, the second rack 32, and the connecting portion 33 may be made of metal plates. The connecting portion 33 may be perpendicular to the first rack 31 and the second rack 32 to reduce the length and weight of the connecting portion 33, thus increasing the energy density of the energy storage apparatus 1000.

The first flange 111 of the first battery 110 holden by the first rack 31 is offset from the second flange 121 of the second battery 120 holden by the second rack 32, which can reduce a spatial waste caused by the first flange 111 and the second flange 121, increasing the energy density of the energy storage apparatus 1000.

Refer to FIG. 7. Optionally, the bracket 30 further includes a first stop block 341 and a second stop block 342. The first stop block 341 is connected to an end of the first rack 31 close to the second rack 32, and the first stop block 341 is configured to limit movement of the first battery 110 towards the second rack 32. The second stop block 342 is connected to an end of the second rack 32 close to the first rack 31, and the second stop block 342 is configured to limit movement of the second battery 120 towards the first rack 31.

The first stop block 341 and the second stop block 342 may be made of a metal material such as steel or aluminum alloy, or a composite material. The first stop block 341 may be integrally molded with the first rack 31, welded to the first rack 31, or bolted to the first rack 31. The second stop block 342 may be integrally molded with the second rack 32, welded to the second rack 32, or bolted to the second rack 32. The first stop block 341 and the second stop block 342 may each be a cube, a sphere, or a cone. The first stop block 341 and the second stop block 342 may alternatively be of an L-shaped structure formed by two plates. The first stop block 341 and the second stop block 342 are configured to prevent collision between the first battery 110 and the second battery 120.

The first stop block 341 and the second stop block 342 can limit movement of the first battery 110 and the second battery 120 along the width direction X of the cabinet 200, preventing collision between the first battery 110 and the second battery 120.

Referring to FIG. 8, FIG. 8 is a schematic structural diagram of a bracket 30 according to some embodiments of this application. In some embodiments, the first rack 31 includes a first holding portion 31a and a first limiting portion 31b connected together. The first holding portion 31a is configured to hold the first battery 110 and the first limiting portion 31b is configured to limit movement of the first battery 110 along a length direction Y of the cabinet 200, the length direction Y of the cabinet 200 being perpendicular to the height direction Z of the cabinet 200. The second rack 32 includes a second holding portion 32a and a second limiting portion 32b connected to each other. The second holding portion 32a is configured to hold the second battery 120, and the second limiting portion 32b is configured to limit movement of the second battery 120 along the length direction Y of the cabinet 200.

Optionally, the first rack 31 and the second rack 32 are both of L-shaped structures. The first holding portion 31a may be perpendicular to the first limiting portion 31b. The second holding portion 32a is perpendicular to the second limiting portion 32b.

The first rack 31 and the second rack 32 may be both of L-shaped structures. The L-shaped structures of the first rack 31 and the second rack 32 may be integrally molded, or formed by welding the first holding portion 31a to the first limiting portion 31b and welding the second holding portion 32a to the second limiting portion 32b.

The first limiting portion 31b and the second limiting portion 32b can limit movement of the first battery 110 and the second battery 120 along the length direction Y of the energy storage apparatus 1000, thereby preventing the battery 100 from shaking within the cabinet 200.

Refer to FIG. 8. Optionally, the bracket 30 further includes a retaining bar 35. The retaining bar 35 is connected to an end of the first limiting portion 31b away from the first holding portion 31a, and the retaining bar 35 is configured to press against the first battery 110 so as to limit movement of the first battery 110 along the height direction Z of the cabinet 200; and/or the retaining bar 35 is connected to an end of the second limiting portion 32b away from the second holding portion 32a, and the retaining bar 35 is configured to press against the second battery 120 so as to limit movement of the second battery 120 along the height direction Z of the cabinet 200.

The retaining bar 35 may be arranged to be parallel to the first holding portion 31a and the second holding portion 32a. The retaining bar 35 is configured to press against a flange 13 of a side wall of a box 10 of the battery 100, to limit movement of the battery 100 towards a height direction Z of the cabinet 200.

The retaining bar 35 may be integrally molded with the first limiting portion 31b and the second limiting portion 32b or welded to the first limiting portion 31b and to the second limiting portion 32b. The retaining bar 35 may be in the shape of a long strip. One end of the retaining bar 35 away from the connecting portion 33 tilts upward along the height direction Z of the cabinet 2000, that is, along a direction away from the first holding portion 31a and the second holding portion 32a, so as to push the battery 100.

The bracket 30 is provided with the retaining bar 35, which can limit movement of the first battery 110 and/or the second battery 120 along the height direction Z of the cabinet 200, thereby preventing the first battery 110 and/or the second battery 120 from shaking within the cabinet 200.

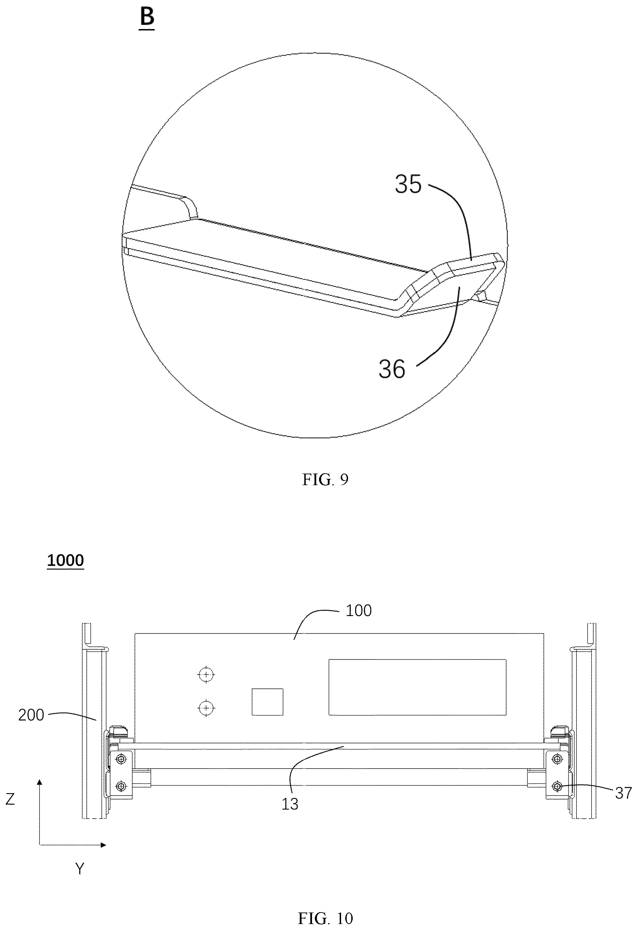

Refer to FIG. 9. Optionally, the first limiting portion 31b is provided with at least two retaining bars 35. A distance between the retaining bar 35 located at an end of the first limiting portion 31b away from the second battery 120 and the first holding portion 31a is L1, and a distance between the retaining bar 35 located at an end of the first limiting portion 31b close to the second battery 120 and the first holding portion 31a is L2, where L1 > L2. And/or, a distance between the retaining bar 35 located at an end of the second limiting portion 32b away from the first battery 110 and the second holding portion 32a is L3, and a distance between the retaining bar 35 located at an end of the second limiting portion 32b close to the first battery 110 and the second holding portion 32a is L4, where L3 > L4.

As the retaining bar 35 approaches the connecting portion 33, distances between the retaining bar 35 and the first holding portion 31a as well as the second holding portion 32a gradually decrease, which is conducive for the retaining bar 35 to perform guiding and pressing functions when the first battery 110 and/or the second battery 120 is pushed into the bracket 200.

Referring to FIGs. 8 and 9, FIG. 9 is an enlarged view of region B in FIG. 8. Optionally, the bracket 30 further includes a buffer pad 36. The buffer pad 36 is disposed on a surface of the retaining bar 35 close to the first holding portion 31a and/or the second holding portion 21a, and the buffer pad 36 is configured to abut against the first battery 110 and/or the second battery 120.

The buffer pad 36 may be adhered to the lower surface of the retaining bar 35, that is, a surface of the retaining bar 35 close to the first holding portion 31a or the second holding portion 21a. The buffer pad 36 abuts against the flange 13 of the side wall of the box 10 of the first battery 110 and/or the second battery 120. The buffer pad 36 may be made of a resilient insulating material, which may be, for example, a rubber, a sponge, or a foam plate, so as to absorb vibration, thus reducing the impact of vibration on the battery 100.

The buffer pad 36 being adhered to the lower surface of the retaining bar 35 can prevent the first battery 110 and/or the second battery 120 from getting bumped during mounting and transportation, thus protecting the battery 100.

Referring to FIGs. 8 and 10, FIG. 10 is a partially front view of an energy storage apparatus 1000 according to some embodiments of this application. Optionally, the bracket 30 further includes a fixing assembly 37. The fixing assembly 37 is configured to fixedly connect the cabinet 200 to the first battery 110, and fixedly connect the cabinet 200 to the second battery 120.

As shown in FIG. 8, optionally, the fixing assembly 37 may include a first liner plate 371, a second liner plate 372, a first adapter sheet 373, and a second adapter sheet 374. The first liner plate 371 is fixedly connected to an end of the first holding portion 31a away from the connecting portion 33. The second liner plate 372 is fixedly connected to an end of the second holding portion 32a away from the connecting portion 33. The first adapter sheet 373 is configured to fixedly connect the first liner plate 371 to the first battery 110. The second adapter sheet 374 is configured to fixedly connect the second liner plate 372 to the second battery 120.

In some embodiments, the fixing assembly 37 further includes at least two rivet nuts (not shown in the figure). One rivet nut fits with the first liner plate 371 and the first adapter sheet 373 and is disposed at an end of the first holding portion 31a away from the connecting portion 33. The other rivet nut fits with the second liner plate 372 and the second adapter sheet 373 and is disposed at an end of the second holding portion 32a away from the connecting portion 33. Optionally, the first liner plate 371 and the second liner plate 372 include liner plate openings (not shown in the figure), where the liner plate opening is in communication with the screw hole of the rivet nut.

**In** some embodiments, the first adapter sheet 373 and the second adapter sheet 374 each include a first opening (not shown in the figure) and a second opening (not shown in the figure). The first opening matches the liner plate opening and is used for enabling a bolt to pass through the first opening and the liner plate opening so as to enter the screw hole of the rivet nut, such that the first liner plate 371 is bolted to the first adapter sheet 373 and the second liner plate 372 is bolted to the second adapter sheet 374. The second opening may match the screw hole on the box 10, so as to enable the first adapter sheet 373 to be bolted to the first battery 110 and the second adapter sheet 374 to be bolted to the second battery 120, thus enabling the bracket 30 to be bolted to the battery 100.

The first liner plate 371 may be integrally molded with the first holding portion 31a or welded to the first holding portion 31a, and the second liner plate 372 may be integrally molded with the second holding portion 32a or welded to the second holding portion 32a. Along the height direction Z of the cabinet 200, the first liner plate 371 may extend from an end of the first holding portion 31a towards a direction away from the first holding portion 31a, and the second liner plate 372 may extend from an end of the second holding portion 32a towards a direction away from the second holding portion 32.

The first adapter sheet 373 may be bolted to the bracket 30 of the first rack 31 via the first liner plate 371 and the rivet nut. The second adapter sheet 374 may be bolted to the second rack 32 via the second liner plate 372 and the rivet nut. The first adapter sheet 373 and the second adapter sheet 374 may alternatively be bolted to the battery 100. Specifically, a bolt fixedly connects the first adapter sheet 373 or the second adapter sheet 374 to the bracket 30 via the first opening, and the other bolt fixedly connects the first adapter sheet 373 or the second adapter sheet 374 to the battery 100 via the second opening. Therefore, the cabinet 200 is fixedly connected to the battery 100 via the first adapter sheet 373 and/or the second adapter sheet 374.

The arrangement of the fixing assembly 37 can achieve fixed connection between the bracket 30 and the box 10, thus fixing the battery 100 to the cabinet 200, preventing the battery 100 from sliding out of the cabinet 200.

In some embodiments, the energy storage apparatus 100 includes a plurality of cabinets 200 formed by the bracket 30 as described in the foregoing embodiment. The bracket 30 is of a Z-shaped structure, and the first rack 31 and the second rack 32 are each of an L-shaped structure. In addition, each bracket 30 further includes eight retaining bars 35, and the first rack 31 and the second rack 32 are each provided with four retaining bars 35. As the retaining bars 35 get closer to the connecting portion 33, distances between each retaining bar 35 and the first holding portion 31a, as well as the second holding portion 32a, become smaller. The bracket 30, including the first rack 31, the second rack 32, the connecting portion 33, the retaining bar 35, the first liner plate 371, and the second liner plate 372, is integrally molded, the first stop block 341 is welded to the first rack 31, the second stop block 342 is welded to the second rack 32, the buffer pad 36 is adhered to the retaining bar 35, the first adapter sheet 373 is bolted to the first rack 31, the second adapter sheet 374 is bolted to the second rack 32, the first adapter sheet 373 is bolted to the first battery 110, and the second adapter sheet 374 is bolted to the second battery 120.

A second aspect of this application provides an energy storage apparatus 1000, including a first battery 110, a second battery 120, and the cabinet 200 according to any one of the foregoing embodiments. The first battery 110 includes a first flange 111 extending towards the second battery 120, and the second battery 120 includes a second flange 121 extending towards the first battery 110. The cabinet 200 is configured to accommodate the first batteries 110 and the second batteries 120.

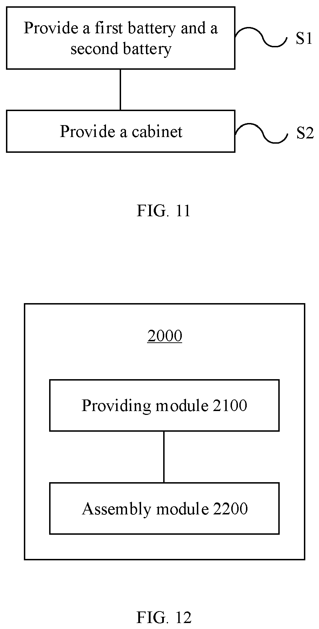

Referring to FIG. 11, FIG. 11 is a schematic flowchart of a manufacturing method of an energy storage apparatus 1000 according to a third aspect of this application. The manufacturing method includes step S1: providing a first battery 110 and a second battery 120, and step S2: providing a cabinet 200. The first battery 110 includes a first flange 111 extending towards the second battery 120, and the second battery 120 includes a second flange 121 extending towards the first battery 110. The cabinet 200 is configured to accommodate the first batteries 110 and the second batteries 120. The cabinet 200 includes a bracket 30 configured to hold the batteries 100. The bracket 30 includes a first rack 31 and a second rack 32. The first rack 31 is configured to hold the first battery 110. The second rack 32 is configured to hold the second battery 120. In a height direction Z of the cabinet 200, the first rack 31 and the second rack 32 are located on different height planes, such that the first flange 111 and the second flange 121 are offset in the height direction Z.

Referring to FIG. 12, FIG. 12 is a schematic diagram of a manufacturing device 2000 of an energy storage apparatus 1000 according to a fourth aspect of this application. The manufacturing device 2000 includes a providing module 2100 and an assembly module 2200. The providing module 2100 is configured to provide a first battery 110, a second battery 120, and a cabinet 200. The first battery 110 includes a first flange 111 extending towards the second battery 120, and the second battery 120 includes a second flange 121 extending towards the first battery 110. The cabinet 200 is configured to accommodate the first batteries 110 and the second batteries 120. The cabinet 200 includes a bracket 30 configured to hold the batteries 100. The bracket 30 includes a first rack 31 and a second rack 32. The first rack 31 is configured to hold the first battery 110. The second rack 32 is configured to hold the second battery 120. In a height direction Z of the cabinet 200, the first rack 31 and the second rack 32 are located on different height planes, such that the first flange 111 and the second flange 121 are offset in the height direction Z. The assembly module 2200 is configured to accommodate the battery 100 in the cabinet 200.

In conclusion, it should be noted that the above embodiments are merely intended for describing the technical solutions of this application but not for limiting this application. This application is not limited to the specific embodiments disclosed in this specification but includes all technical solutions falling in the scope of the claims.

## Claims

1. A cabinet (200) of an energy storage apparatus (1000), wherein the cabinet (200) comprises a bracket (30),
wherein the bracket is configured to carry a first battery and a second battery, wherein the first battery and the second battery are positioned on different height planes and placed back to back;
wherein the bracket (30) comprises a first rack (31) configured to hold the first battery (110), and a second rack (32) configured to hold the second battery (120);
wherein the first battery (110) comprises a first flange (111) extending towards the second battery (120), and the second battery (120) comprises a second flange (121) extending towards the first battery (110);
wherein in a height direction of the cabinet (200), the first rack (31) and the second rack (32) are located on different height planes, such that the first flange (111) and the second flange (121) are offset in the height direction;
**characterized in that**
the first rack (31) comprises a first holding portion (31a) and a first limiting portion (31b) connected to each other, wherein the first holding portion (31a) is configured to hold the first battery (110) and the first limiting portion (31b) is configured to limit movement of the first battery (110) along a length direction of the cabinet (200), the length direction of the cabinet (200) being perpendicular to the height direction of the cabinet (200);
the second rack (32) comprises a second holding portion (32a) and a second limiting portion (32b) connected to each other, wherein the second holding portion (32a) is configured to hold the second battery (120), and the second limiting portion (32b) is configured to limit movement of the second battery (120) along the length direction of the cabinet (200);
the bracket (30) further comprises a retaining bar (35), wherein the retaining bar (35) is connected to an end of the first limiting portion (31b) away from the first holding portion (31a), and the retaining bar (35) is configured to press against the first battery (110) so as to limit movement of the first battery (110) along the height direction of the cabinet (200); and
the retaining bar (35) is provided in a quantity of at least two, a distance between the retaining bar (35) located at an end of the first limiting portion (31b) away from the second battery (120) and the first holding portion (31a) is L1, and a distance between the retaining bar (35) located at an end of the first limiting portion (31b) close to the second battery (120) and the first holding portion (31a) is L2, wherein L1 > L2.

2. The cabinet (200) according to claim 1, **characterized in that** the bracket (30) further comprises a connecting portion (33) configured to connect the first rack (31) and the second rack (32).

3. The cabinet (200) according to claim 1 or 2, **characterized in that** the bracket (30) further comprises:
a first stop block (341) connected to an end of the first rack (31) close to the second rack (32), the first stop block (341) being configured to limit movement of the first battery (110) towards the second rack (32); and
a second stop block (342) connected to an end of the second rack (32) close to the first rack (31), the second stop block (342) being configured to limit movement of the second battery (120) towards the first rack (31).

4. The cabinet (200) according to any one of claims 1 to 3, wherein the retaining bar (35) is connected to an end of the second limiting portion (32b) away from the second holding portion (32a), and the retaining bar (35) is configured to press against the second battery (120) so as to limit movement of the second battery (120) along the height direction of the cabinet (200).

5. The cabinet (200) according to any one of claims 1 to 4, wherein a distance between the retaining bar (35) located at an end of the second limiting portion (32b) away from the first battery (110) and the second holding portion (32a) is L3, and a distance between the retaining bar (35) located at an end of the second limiting portion (32b) close to the first battery (110) and the second holding portion (32a) is L4, wherein L3 > L4.

6. The cabinet (200) according to claim 4 or 5, wherein the bracket (30) further comprises a buffer pad (36), wherein the buffer pad (36) is disposed on a surface of the retaining bar (35) close to the first holding portion (31a) and/or the second holding portion (32a), and the buffer pad (36) is configured to abut against the first battery (110) and/or the second battery (120).

7. The cabinet (200) according to any one of claims 1 to 6, wherein the bracket (30) further comprises a fixing assembly (37), wherein the fixing assembly (37) is configured to fixedly connect the cabinet (200) to the first battery (110), and fixedly connect the cabinet (200) to the second battery (120).

8. The cabinet (200) according to claim 7, wherein the fixing assembly (37) comprises:
a first liner plate (371) fixedly connected to an end of the first holding portion (31a) away from the connecting portion (33);
a second liner plate (372) fixedly connected to an end of the second holding portion (32a) away from the connecting portion (33);
a first adapter sheet (373) configured to fixedly connect the first liner plate (371) to the first battery (110); and
a second adapter sheet (374) configured to fixedly connect the second liner plate (372) to the second battery (120).

9. An energy storage apparatus (1000), comprising:
the cabinet (200) according to any of the claims 1-8, the first battery (110) and the second battery (120).

10. A manufacturing method of energy storage apparatus (1000), comprising:
providing (S1) a first battery and a second battery, wherein the first battery and the second battery are positioned on different height planes and placed back to back, and wherein the first battery comprises a first flange extending towards the second battery, and the second battery comprises a second flange extending towards the first battery; and
providing (S2) a cabinet, wherein the cabinet comprises a bracket, wherein the bracket is configured to carry the first battery and the second battery, and the bracket comprises a first rack and a second rack, the first rack being configured to hold the first battery and the second rack being configured to hold the second battery; wherein in a height direction of the cabinet, the first rack and the second rack are located on different height planes, such that the first flange and the second flange are offset in the height direction;
**characterized in that**
the first rack (31) comprises a first holding portion (31a) and a first limiting portion (31b) connected to each other, wherein the first holding portion (31a) is configured to hold the first battery (110) and the first limiting portion (31b) is configured to limit movement of the first battery (110) along a length direction of the cabinet (200), the length direction of the cabinet (200) being perpendicular to the height direction of the cabinet (200);
the second rack (32) comprises a second holding portion (32a) and a second limiting portion (32b) connected to each other, wherein the second holding portion (32a) is configured to hold the second battery (120), and the second limiting portion (32b) is configured to limit movement of the second battery (120) along the length direction of the cabinet (200);
the bracket (30) further comprises a retaining bar (35), wherein the retaining bar (35) is connected to an end of the first limiting portion (31b) away from the first holding portion (31a), and the retaining bar (35) is configured to press against the first battery (110) so as to limit movement of the first battery (110) along the height direction of the cabinet (200); and
the retaining bar (35) is provided in a quantity of at least two, a distance between the retaining bar (35) located at an end of the first limiting portion (31b) away from the second battery (120) and the first holding portion (31a) is L1, and a distance between the retaining bar (35) located at an end of the first limiting portion (31b) close to the second battery (120) and the first holding portion (31a) is L2, wherein L1 > L2.

## Patentansprüche

1. Schrank (200) einer Energiespeichervorrichtung (1000), wobei der Schrank (200) eine Halterung (30) umfasst,
wobei die Halterung dazu ausgelegt ist, eine erste Batterie und eine zweite Batterie zu tragen, wobei die erste Batterie und die zweite Batterie auf unterschiedlichen Höhenebenen angeordnet und Rücken an Rücken platziert sind;
wobei die Halterung (30) ein erstes Gestell (31), das dazu ausgelegt ist, die erste Batterie (110) zu halten, und ein zweites Gestell (32), das dazu ausgelegt ist, die zweite Batterie (120) zu halten, umfasst;
wobei die erste Batterie (110) einen ersten Flansch (111) umfasst, der sich zu der zweiten Batterie (120) hin erstreckt, und die zweite Batterie (120) einen zweiten Flansch (121) umfasst, der sich zu der ersten Batterie (110) hin erstreckt;
wobei in einer Höhenrichtung des Schranks (200) das erste Gestell (31) und das zweite Gestell (32) auf unterschiedlichen Höhenebenen angeordnet sind, sodass der erste Flansch (111) und der zweite Flansch (121) in Höhenrichtung versetzt sind;
**dadurch gekennzeichnet, dass**
das erste Gestell (31) einen ersten Halteabschnitt (31a) und einen ersten Begrenzungsabschnitt (31b) umfasst, die miteinander verbunden sind, wobei der erste Halteabschnitt (31a) dazu ausgelegt ist, die erste Batterie (110) zu halten, und der erste Begrenzungsabschnitt (31b) dazu ausgelegt ist, eine Bewegung der ersten Batterie (110) in einer Längsrichtung des Schranks (200) zu begrenzen, wobei die Längsrichtung des Schranks (200) senkrecht zur Höhenrichtung des Schranks (200) ist;
das zweite Gestell (32) einen zweiten Halteabschnitt (32a) und einen zweiten Begrenzungsabschnitt (32b) umfasst, die miteinander verbunden sind, wobei der zweite Halteabschnitt (32a) dazu ausgelegt ist, die zweite Batterie (120) zu halten, und der zweite Begrenzungsabschnitt (32b) dazu ausgelegt ist, eine Bewegung der zweiten Batterie (120) in Längsrichtung des Schranks (200) zu begrenzen;
die Halterung (30) ferner eine Haltestange (35) umfasst, wobei die Haltestange (35) mit einem Ende des ersten Begrenzungsabschnitts (31b), das von dem ersten Halteabschnitt (31a) weg liegt, verbunden ist, und die Haltestange (35) dazu ausgelegt ist, gegen die erste Batterie (110) zu drücken, um eine Bewegung der ersten Batterie (110) in Höhenrichtung des Schranks (200) zu begrenzen; und
die Haltestange (35) in einer Anzahl von mindestens zwei vorgesehen ist, ein Abstand zwischen der Haltestange (35), die an einem Ende des ersten Begrenzungsabschnitts (31b) angeordnet ist, das von der zweiten Batterie (120) weg liegt, und dem ersten Halteabschnitt (31a) L1 ist, und ein Abstand zwischen der Haltestange (35), die an einem Ende des ersten Begrenzungsabschnitts (31b) angeordnet ist, das nahe bei der zweiten Batterie (120) liegt, und dem ersten Halteabschnitt (31a) L2 ist, wobei L1 > L2 ist.

2. Schrank (200) nach Anspruch 1, **dadurch gekennzeichnet, dass** die Halterung (30) ferner einen Verbindungsabschnitt (33) umfasst, der dazu ausgelegt ist, das erste Gestell (31) und das zweite Gestell (32) miteinander zu verbinden.

3. Schrank (200) nach Anspruch 1 oder 2, **dadurch gekennzeichnet, dass** die Halterung (30) ferner umfasst:
einen ersten Anschlagblock (341), der mit einem Ende des ersten Gestells (31), das nahe bei dem zweiten Gestell (32) liegt, verbunden ist, wobei der erste Anschlagblock (341) dazu ausgelegt ist, eine Bewegung der ersten Batterie (110) in Richtung des zweiten Gestells (32) zu begrenzen; und
einen zweiten Anschlagblock (342), der mit einem Ende des zweiten Gestells (32), das nahe bei dem ersten Gestell (31) liegt, verbunden ist, wobei der zweite Anschlagblock (342) dazu ausgelegt ist, eine Bewegung der zweiten Batterie (120) in Richtung des ersten Gestells (31) zu begrenzen.

4. Schrank (200) nach einem der Ansprüche 1 bis 3, **dadurch gekennzeichnet, dass** die Haltestange (35) mit einem Ende des zweiten Begrenzungsabschnitts (32b), das von dem zweiten Halteabschnitt (32a) weg liegt, verbunden ist und die Haltestange (35) dazu ausgelegt ist, gegen die zweite Batterie (120) zu drücken, um eine Bewegung der zweiten Batterie (120) in Höhenrichtung des Schranks (200) zu begrenzen.

5. Schrank (200) nach einem der Ansprüche 1 bis 4, **dadurch gekennzeichnet, dass** ein Abstand zwischen der Haltestange (35), die an einem Ende des zweiten Begrenzungsabschnitts (32b) angeordnet ist, das von der ersten Batterie (110) weg liegt, und dem zweiten Halteabschnitt (32a) L3 ist und ein Abstand zwischen der Haltestange (35), die an einem Ende des zweiten Begrenzungsabschnitts (32b) angeordnet ist, das nahe bei der ersten Batterie (110) liegt, und dem zweiten Halteabschnitt (32a) L4 ist, wobei L3 > L4 ist.

6. Schrank (200) nach Anspruch 4 oder 5, **dadurch gekennzeichnet, dass** die Halterung (30) ferner ein Pufferelement (36) umfasst, wobei das Pufferelement (36) auf einer Oberfläche der Haltestange (35), die nahe bei dem ersten Halteabschnitt (31a) und/oder dem zweiten Halteabschnitt (32a) liegt, angeordnet ist und das Pufferelement (36) dazu ausgelegt ist, an der ersten Batterie (110) und/oder der zweiten Batterie (120) anzuliegen.

7. Schrank (200) nach einem der Ansprüche 1 bis 6, **dadurch gekennzeichnet, dass** die Halterung (30) ferner eine Befestigungsanordnung (37) umfasst, wobei die Befestigungsanordnung (37) dazu ausgelegt ist, den Schrank (200) fest mit der ersten Batterie (110) zu verbinden und den Schrank (200) fest mit der zweiten Batterie (120) zu verbinden.

8. Schrank (200) nach Anspruch 7, wobei die Befestigungsanordnung (37) umfasst:
eine erste Auskleidungsplatte (371), die fest mit einem Ende des ersten Halteabschnitts (31a), das von dem Verbindungsabschnitt (33) weg liegt, verbunden ist;
eine zweite Auskleidungsplatte (372), die fest mit einem Ende des zweiten Halteabschnitts (32a), das von dem Verbindungsabschnitt (33) weg liegt, verbunden ist;
ein erstes Adapterelement (373), das dazu ausgelegt ist, die erste Auskleidungsplatte (371) fest mit der ersten Batterie (110) zu verbinden; und
ein zweites Adapterelement (374), das dazu ausgelegt ist, die zweite Auskleidungsplatte (372) fest mit der zweiten Batterie (120) zu verbinden.

9. Energiespeichervorrichtung (1000), umfassend:
den Schrank (200) nach einem der Ansprüche 1 bis 8, die erste Batterie (110) und die zweite Batterie (120).

10. Herstellungsverfahren einer Energiespeichervorrichtung (1000), umfassend:
Bereitstellen (S1) einer ersten Batterie und einer zweiten Batterie, wobei die erste Batterie und die zweite Batterie auf unterschiedlichen Höhenebenen angeordnet und Rücken an Rücken platziert sind und wobei die erste Batterie einen ersten Flansch umfasst, der sich zu der zweiten Batterie hin erstreckt, und die zweite Batterie einen zweiten Flansch umfasst, der sich zu der ersten Batterie hin erstreckt; und
Bereitstellen (S2) eines Schranks, wobei der Schrank eine Halterung umfasst, wobei die Halterung dazu ausgelegt ist, die erste Batterie und die zweite Batterie zu tragen, und die Halterung ein erstes Gestell und ein zweites Gestell umfasst, wobei das erste Gestell dazu ausgelegt ist, die erste Batterie zu halten, und das zweite Gestell dazu ausgelegt ist, die zweite Batterie zu halten; wobei in einer Höhenrichtung des Schranks das erste Gestell und das zweite Gestell auf unterschiedlichen Höhenebenen angeordnet sind, sodass der erste Flansch und der zweite Flansch in Höhenrichtung versetzt sind;
**dadurch gekennzeichnet, dass**
das erste Gestell (31) einen ersten Halteabschnitt (31a) und einen ersten Begrenzungsabschnitt (31b) umfasst, die miteinander verbunden sind, wobei der erste Halteabschnitt (31a) dazu ausgelegt ist, die erste Batterie (110) zu halten, und der erste Begrenzungsabschnitt (31b) dazu ausgelegt ist, eine Bewegung der ersten Batterie (110) in einer Längsrichtung des Schranks (200) zu begrenzen, wobei die Längsrichtung des Schranks (200) senkrecht zur Höhenrichtung des Schranks (200) ist;
das zweite Gestell (32) einen zweiten Halteabschnitt (32a) und einen zweiten Begrenzungsabschnitt (32b) umfasst, die miteinander verbunden sind, wobei der zweite Halteabschnitt (32a) dazu ausgelegt ist, die zweite Batterie (120) zu halten, und der zweite Begrenzungsabschnitt (32b) dazu ausgelegt ist, eine Bewegung der zweiten Batterie (120) in Längsrichtung des Schranks (200) zu begrenzen;
die Halterung (30) ferner eine Haltestange (35) umfasst, wobei die Haltestange (35) mit einem Ende des ersten Begrenzungsabschnitts (31b), das von dem ersten Halteabschnitt (31a) weg liegt, verbunden ist, und die Haltestange (35) dazu ausgelegt ist, gegen die erste Batterie (110) zu drücken, um eine Bewegung der ersten Batterie (110) in Höhenrichtung des Schranks (200) zu begrenzen; und
die Haltestange (35) in einer Anzahl von mindestens zwei vorgesehen ist, ein Abstand zwischen der Haltestange (35), die an einem Ende des ersten Begrenzungsabschnitts (31b) angeordnet ist, das von der zweiten Batterie (120) weg liegt, und dem ersten Halteabschnitt (31a) L1 ist, und ein Abstand zwischen der Haltestange (35), die an einem Ende des ersten Begrenzungsabschnitts (31b) angeordnet ist, das nahe bei der zweiten Batterie (120) liegt, und dem ersten Halteabschnitt (31a) L2 ist, wobei L1 > L2 ist.

## Revendications

1. Armoire (200) pour un appareil d'emmagasinage d'énergie (1000), l'armoire (200) comprenant un support (30),
le support étant conçu pour porter une première batterie et une seconde batterie, la première batterie et la seconde batterie étant placées sur des plans à des hauteurs différentes et disposées dos à dos ;
le support (30) comprenant une première tablette (31) conçue pour soutenir la première batterie (110), et une seconde tablette (32) conçue pour soutenir la seconde batterie (120) ;
la première batterie (110) comprenant une première ailette (111) s'étendant vers la seconde batterie (120), et la seconde batterie (120) comprenant une seconde ailette (121) s'étendant vers la première batterie (110) ;
la première tablette (31) et la seconde tablette (32), dans une direction de hauteur de l'armoire (200), étant placées sur des plans à des hauteurs différentes, de telle sorte que la première ailette (111) et la seconde ailette (121) soient décalées dans la direction de hauteur ;
**caractérisée en ce que**
la première tablette (31) comprend une première partie de soutien (31a) et une première partie de limitation (31b) raccordées l'une à l'autre, la première partie de soutien (31a) étant conçue pour soutenir la première batterie (110) et la première partie de limitation (31b) étant conçue pour limiter un déplacement de la première batterie (110) le long d'une direction de longueur de l'armoire (200), la direction de longueur de l'armoire (200) étant perpendiculaire à la direction de hauteur de l'armoire (200) ;
la seconde tablette (32) comprend une seconde partie de soutien (32a) et une seconde partie de limitation (32b) raccordées l'une à l'autre, la seconde partie de soutien (32a) étant conçue pour soutenir la seconde batterie (120) et la seconde partie de limitation (32b) étant conçue pour limiter un déplacement de la seconde batterie (120) le long de la direction de longueur de l'armoire (200) ;
le support (30) comprend, en outre, une barre de retenue (35), la barre de retenue (35) étant raccordée à une extrémité de la première partie de limitation (31b) éloignée de la première partie de soutien (31a), et la barre de retenue (35) étant conçue pour exercer une pression contre la première batterie (110) afin de limiter un déplacement de la première batterie (110) le long de la direction de hauteur de l'armoire (200) ; et
la barre de retenue (35) est présente au nombre d'au moins deux, une distance entre la barre de retenue (35) située à une extrémité de la première partie de limitation (31b) éloignée de la seconde batterie (120) et la première partie de soutien (31a) est L1, et une distance entre la barre de retenue (35) située à une extrémité de la première partie de limitation (31b) proche de la seconde batterie (120) et la première partie de soutien (31a) est L2, où L1 > L2.

2. Armoire (200) selon la revendication 1, **caractérisée en ce que** le support (30) comprend, en outre, une partie de raccordement (33) conçue pour raccorder la première tablette (31) et la seconde tablette (32).

3. Armoire (200) selon la revendication 1 ou 2, **caractérisée en ce que** le support (30) comprend en outre :
un premier bloc d'arrêt (341) raccordé à une extrémité de la première tablette (31) proche de la seconde tablette (32), le premier bloc d'arrêt (341) étant conçu pour limiter un déplacement de la première batterie (110) en direction de la seconde tablette (32) ; et
un second bloc d'arrêt (342) raccordé à une extrémité de la seconde tablette (32) proche de la première tablette (31), le second bloc d'arrêt (342) étant conçu pour limiter un déplacement de la seconde batterie (120) en direction de la première tablette (31).

4. Armoire (200) selon l'une quelconque des revendications 1 à 3, dans laquelle la barre de retenue (35) est raccordée à une extrémité de la seconde partie de limitation (32b) éloignée de la seconde partie de soutien (32a), et la barre de retenue (35) est conçue pour exercer une pression contre la seconde batterie (120) de façon à limiter un déplacement de la seconde batterie (120) le long de la direction de hauteur de l'armoire (200).

5. Armoire (200) selon l'une quelconque des revendications 1 à 4, dans laquelle une distance entre la barre de retenue (35) située à une extrémité de la seconde partie de limitation (32b) éloignée de la première batterie (110) et la seconde partie de soutien (32a) est L3, et une distance entre la barre de retenue (35) située à une extrémité de la seconde partie de limitation (32b) proche de la première batterie (110) et la seconde partie de soutien (32a) est L4, où L3 > L4.

6. Armoire (200) selon la revendication 4 ou 5, dans laquelle le support (30) comprend, en outre, un tampon (36), le tampon (36) étant disposé sur une surface de la barre de retenue (35) proche de la première partie de soutien (31a) et/ou la seconde partie de soutien (32a), et le tampon (36) étant conçu pour venir en appui contre la première batterie (110) et/ou la seconde batterie (120).

7. Armoire (200) selon l'une quelconque des revendications 1 à 6, dans laquelle le support (30) comprend, en outre, un ensemble de fixation (37), l'ensemble de fixation (37) étant conçu pour raccorder fixement l'armoire (200) à la première batterie (110), et raccorder fixement l'armoire (200) à la seconde batterie (120).

8. Armoire (200) selon la revendication 7, dans laquelle l'ensemble de fixation (37) comprend :
une première plaque de recouvrement (371) raccordée fixement à une extrémité de la première partie de soutien (31a) éloignée de la partie de raccordement (33) ;
une seconde plaque de recouvrement (372) raccordée fixement à une extrémité de la seconde partie de soutien (32a) éloignée de la partie de raccordement (33) ;
une première plaque d'adaptation (373) conçue pour raccorder fixement la première plaque de recouvrement (371) à la première batterie (110) ; et
une seconde plaque d'adaptation (374) conçue pour raccorder fixement la seconde plaque de recouvrement (372) à la seconde batterie (120).

9. Appareil d'emmagasinage d'énergie (1000), comprenant :
l'armoire (200) selon l'une quelconque des revendications 1 à 8, la première batterie (110) et la seconde batterie (120).

10. Procédé de fabrication d'un appareil d'emmagasinage d'énergie (1000), comprenant :
préparer (S1) des première et seconde batteries, les première et seconde batteries étant placées sur des plans à des hauteurs différentes et disposées dos à dos, et la première batterie comprenant une première ailette s'étendant vers la seconde batterie, et la seconde batterie comprenant une seconde ailette s'étendant vers la première batterie ; et
préparer (S2) une armoire, l'armoire comprenant un support, le support étant conçu pour porter la première batterie et la seconde batterie, et le support comprenant une première tablette et une seconde tablette, la première tablette étant conçue pour soutenir la première batterie et la seconde tablette étant conçue pour soutenir la seconde batterie ; la première tablette et la seconde tablette, dans une direction de hauteur de l'armoire, étant placées sur des plans à des hauteurs différentes, de telle sorte que la première ailette et la seconde ailette soient décalées dans la direction de hauteur ;
**caractérisé en ce que**
la première tablette (31) comprend une première partie de soutien (31a) et une première partie de limitation (31b) raccordées l'une à l'autre, la première partie de soutien (31a) étant conçue pour soutenir la première batterie (110) et la première partie de limitation (31b) étant conçue pour limiter un déplacement de la première batterie (110) le long d'une direction de longueur de l'armoire (200), la direction de longueur de l'armoire (200) étant perpendiculaire à la direction de hauteur de l'armoire (200) ;
la seconde tablette (32) comprend une seconde partie de soutien (32a) et une seconde partie de limitation (32b) raccordées l'une à l'autre, la seconde partie de soutien (32a) étant conçue pour soutenir la seconde batterie (120) et la seconde partie de limitation (32b) étant conçue pour limiter un déplacement de la seconde batterie (120) le long de la direction de longueur de l'armoire (200) ;
le support (30) comprend, en outre, une barre de retenue (35), la barre de retenue (35) étant raccordée à une extrémité de la première partie de limitation (31b) éloignée de la première partie de soutien (31a), et la barre de retenue (35) étant conçue pour exercer une pression contre la première batterie (110) afin de limiter un déplacement de la première batterie (110) le long de la direction de hauteur de l'armoire (200) ; et
la barre de retenue (35) est présente au nombre d'au moins deux, une distance entre la barre de retenue (35) située à une extrémité de la première partie de limitation (31b) éloignée de la seconde batterie (120) et la première partie de soutien (31a) est L1, et une distance entre la barre de retenue (35) située à une extrémité de la première partie de limitation (31b) proche de la seconde batterie (120) et la première partie de soutien (31a) est L2, où L1 > L2.
